(19) **Europäisches Patentamt / European Patent Office / Office européen des brevets**

(11) **EP 2 736 842 B1**

(12) # EUROPEAN PATENT SPECIFICATION

(45) Date of publication and mention of the grant of the patent:
**29.11.2017 Bulletin 2017/48**

(21) Application number: **12750308.4**

(22) Date of filing: **26.05.2012**

(51) Int Cl.:
**C01B 7/04** *(2006.01)*     **C01B 7/07** *(2006.01)*

(86) International application number:
**PCT/CN2012/076132**

(87) International publication number:
**WO 2013/152550 (17.10.2013 Gazette 2013/42)**

(54) **PROCESS OF PRODUCING CHLORINE GAS BY CATALYTIC OXIDATION OF HYDROGEN CHLORIDE**

VERFAHREN ZUR HERSTELLUNG VON CHLORGAS DURCH KATALYTISCHE OXIDIERUNG VON WASSERSTOFFCHLOR

PROCÉDÉ DE PRODUCTION DE CHLORE GAZEUX PAR OXYDATION CATALYTIQUE DE CHLORURE D'HYDROGÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.04.2012 CN 201210103886**

(43) Date of publication of application:
**04.06.2014 Bulletin 2014/23**

(73) Proprietors:
- **Wanhua Chemical Group Co., Ltd.**
  **Yantai, Shandong 264006 (CN)**
- **Wanhua Chemical (Ningbo) Co., Ltd.**
  **Ningbo Zhejiang 315 812 (CN)**

(72) Inventors:
- **DING, Jiansheng**
  **Yantai**
  **Shandong 264002 (CN)**
- **LUO, Wuxi**
  **Yantai**
  **Shandong 264002 (CN)**
- **CHEN, Bin**
  **Yantai**
  **Shandong 264002 (CN)**
- **ZHANG, Kunpeng**
  **Yantai**
  **Shandong 264002 (CN)**
- **HUA, Weiqi**
  **Yantai**
  **Shandong 264002 (CN)**

(74) Representative: **Viering, Jentschura & Partner mbB**
**Patent- und Rechtsanwälte**
**Kennedydamm 55 / Roßstrasse**
**40476 Düsseldorf (DE)**

(56) References cited:
**BE-A4- 1 011 944     CN-A- 101 274 207**
**DE-A1- 10 234 908     GB-A- 1 467 195**
**US-A1- 2007 274 900     US-A1- 2008 264 253**
**US-A1- 2008 267 846     US-A1- 2008 267 846**
**US-A1- 2010 266 481**

**Description**

**Field of the Invention**

The present invention relates to a process of producing chlorine gas by catalytic oxidation of hydrogen chloride, more particularly, a process comprising incorporating an oxidizing agent which does not generate additional or new impurities in the reaction system into a gas stream of hydrogen chloride containing impurities, conducting oxidation pretreatment of hydrogen chloride by sonication, and catalytically oxidizing hydrogen chloride to produce chlorine gas.

**Background of the Invention**

Chlorine gas is very important as a basic chemical raw material, and primarily used for producing polyvinyl chloride (PVC), the intermediates (MDI, TDI, HDI, etc.) of polyurethanes, epoxy resins, silicone resins, synthetic rubbers, chlorofluorocarbons, $TiO_2$ coatings, organic chlorine intermediates (chlorobenzene, chloroacetic acid, benzyl chloride, chlorotoluene, etc.), as well as chlorine-consuming products such as some agrichemicals, building materials, medical preparations etc. Chlorine for industrial use is primarily obtained by electrolyzing the saline solution, in conjunction with production of sodium hydroxide. Currently, there are a large surplus of sodium hydroxide and a shortage of chlorine throughout the world. Furthermore, in the most of the processes for preparing chlorine-consuming products, the utilization rate of chlorine atom is very low. For example, in the production process of chlorinated organic products such as chlorinated aromatics, chlorinated paraffin and the like, the chlorine atom has the highest utilization rate of up to 50%, the remaining more than 50% of the chlorine atoms are transformed into hydrogen chloride. Furthermore, for example, in the production process of the intermediates, such as MDI, TDI, etc., of polyurethane, chlorine atom acts only as the carrier in the phosgenation reactions, but is not introduced into the targeted product, and almost 100% of the original chlorine atoms are finally transformed into hydrogen chloride. The byproduced hydrogen chloride is low in price or value, and has less demand in industry and still has strong corrosion. If the excessive byproduct of hydrogen chloride is neutralized and discharged, which leads to environmental pollution. Therefore, production of chlorine gas from hydrogen chloride may not only be a way to utilize the byproduced hydrogen chloride efficiently, but also may solve the common imbalance of supply and demand for chlorine and sodium hydroxide at present.

As a process of preparing chlorine from hydrogen chloride, there are electrolysis method, direct oxidation method and catalytic oxidation method (i.e., Deacon process) in particular. The electrolysis method requires high investment, involves high energy consumption, and has a strong impact on the environment. The direct oxidation method has problems such as waste solution treatment, incomplete conversion of hydrogen chloride etc. As such, both the electrolysis method and direct oxidation method are unsatisfied in the industry. The catalytic oxidation method is one that hydrogen chloride is oxidized by air or oxygen in the presence of a catalyst, and the reaction is as follows:

$$4HCl + O_2 \rightarrow 2Cl_2 + 2H_2O$$

The reaction may be conducted in the presence of a catalyst at the temperature of about 250~450°C. For example, BP1403(1868), US85370, US165802, US118209 describe such a process referred to as Deacon process.

The catalyst system usually used for the oxidation process of hydrogen chloride comprises ruthenium-based catalyst, cupper-based catalysts, chromium-based catalysts.

Japan Sumitomo Chemical Co., Ltd. has developed a ruthenium oxide catalysts supported on rutile $TiO_2$, and filed a large number of patent applications related to such catalysts. The Company has developed a set of apparatus that using said ruthenium oxide catalysts, however, the catalysts are expensive, and should need a high cost to prepare them.

Japan Mitsui Toatsu Chemicals, Inc. has developed a MT-Chlor process which using $CrO_3$ supported on amorphous $SiO_2$ as catalyst, and established a production facility with capacity of 30-60 thousand tons per year in 1986. In this process, the reaction temperature is 350~430°C, and the conversion of hydrogen chloride is 75~80%. However, the chromium ion as catalytic active component of the catalyst $CrO_3$ used in the process is easy to lose, thereby reduces the life of the catalyst and pollutes the environment. Furthermore, the catalyst is very sensitive to the presence of Fe (and also to a small amount of Ni and Ti), and thus the Fe content in $SiO_2$ and in the wall of the reactor are both required to be <1%.

Cu-based catalyst was developed firstly. Shell Oil Company (US) has used a copper salt catalyst supported on $SiO_2$, designed a process using the catalyst, and established production facilities with a capacity of 30 thousand tons per year in 1965, respectively in Netherlands and India. However, these production facilities were closed due to poor economic effectiveness in the early 1970s. University of California has used copper oxide and copper chloride as catalyst, and completed the lab-scale and pilot-scale test by employing two stage fluidized bed process, but there is no industrial production reports about this process. After 2000, the study on producing chlorine from hydrogen chloride is started in China, particularly, NANJING UNIVERSITY OF TECHNOLOGY and TSINGHUA UNIVERSITY, as the primary research institutions, developed copper salt catalyst supported on $Al_2O_3$ microspheres.

Whatever kind of the catalyst is, the reaction is very sensitive to the impurities contained in the feed gas. The impurities will be deposited on the surface of the catalyst gradually, and react with the active components in the catalyst and produce undesired compounds, thereby lead to inactivation of the catalyst. In view of this, various methods of pretreating the feed gas of hydrogen chloride, particularly, the techniques of treating the impurities containing sulfur and the impurities containing chlorine, are proposed.

CN1201013 (Japan Sumitomo Chemical Co., Ltd.) discloses a process of pretreating hydrogen chloride feed gas, wherein hydrogen chloride is absorbed in water or unsaturated HCl solution in order to remove impurities in the form of gas, and then hydrogen chloride is recovered from the hydrochloric acid solution formed by absorption. The process is relatively effective, however, hydrogen chloride and water can form an azeotrope, the separation of hydrogen chloride from aqueous hydrochloric acid solution needs to consume a large amount of water steam. Furthermore, in some processes, the impurities having a relatively high boiling temperature such as chlorides and the like is difficult to separate from hydrogen chloride.

US 2008264253 (Bayer) proposes a method of compression refrigeration, wherein organics be separated by condensing at higher pressure and lower temperature. The organics contained in the gas stream of hydrogen chloride after separation are required to be very low, and thus the energy consumption in the compression and refrigeration is considerably high.

Further, Chinese Patent publication CN101652162 provides a process of removing impurities contained in hydrogen chloride feed gas by adsorption-regeneration, comprising: using an adsorbent such as activated carbon and the like to adsorb impurities contained in hydrogen chloride, and then regenerating the adsorbent by using recycle gas, such that the adsorbent can be reused. In the regeneration step, the adsorbed impurities can be collected and then treated. In the adsorption-regeneration method, there are problems as follows: the adsorbent have a limited life and need to be replaced periodically; in addition, the adsorbent need to conduct a regeneration by switching the process, and the collected impurities need to be treated once more.

Chinese Patent publication CN101448736A discloses a processes for the production of chlorine from a gas containing hydrogen chloride and carbon monoxide, which comprises: a) catalytically oxidizing carbon monoxide as well as optional further oxidizable constituents with oxygen to form carbon dioxide in an upstream reactor under adiabatic conditions; and b) catalytically oxidizing the hydrogen chloride in the gas containing hydrogen chloride obtained in step a) to form chlorine.

Chinese Patent publication CN101448739A discloses a process for separating carbon monoxide from a gas containing hydrogen chloride, wherein said process comprise the carbon monoxide reacting with chlorine to form phosgene.

Chinese Patent publication CN101293636A discloses a process for obtaining the purified hydrogen chloride, wherein carbon monoxide and sulfur-containing impurities are removed from a gas stream containing hydrogen chloride by absorption.

WO2010020346 A1 discloses a method for the heterogeneous catalytic oxidation of hydrogen chloride by means of gases comprising oxygen, wherein a gas mixture comprising at least hydrogen chloride, oxygen, ozone and optional further additional compounds is produced and passed through a solid catalyst.

WO2008125235 A1 discloses a method for removing impurities from a gas flow containing hydrogen chloride by adsorption.

WO2008029938 A1 discloses a method for producing chlorine, which comprises the following steps: adding chlorine to hydrogen-chloride source gas containing carbon monoxide as an impurity, contacting with phosgenation catalyst, and then the gas containing hydrogen chloride is oxidized by a contact gas-phase oxidation reaction of gas containing hydrogen chloride with oxygen to produce chlorine.

JP2000034105 A discloses a method for producing chlorine, comprising the following steps: a mixed gas comprising hydrogen chloride and impurities is dissolved in water or an aqueous solution of hydrochloric acid; a gas consisting essentially of the hydrogen chloride is separated from the solution containing water and the impurities by diffusion; and the gas consisting essentially of the hydrogen chloride is oxidized with oxygen to provide the objective chlorine.

JP2006117529A discloses a process of purifying hydrogen chloride by condensation. Additionally, US2008/0267846 discloses a process of producing chlorine gas by catalytic oxidation of hydrogen chloride, characterized in that said process comprises: providing a crude gas comprising hydrogen chloride and at least one sulfur compound; and passing the crude gas across a sacrificial material such that at least a portion of the at least one sulfur compounds is oxidized by oxygen and precipitated as sulfate onto the sacrificial material to provide a hydrogen chloride product gas; and further feeding the hydrogen chloride product gas to a subsequent catalytic oxidation reaction of the hydrogen chloride. However, oxygen used as the oxidizing agent in US2008/0267846 is very difficult to or even cannot oxidize hydrocarbons containing chlorine or sulfur.

**Summary of the Invention**

It is an object of the present invention to provide a simple and convenient process for removing impurities from hydrogen chloride and catalytically oxidizing hydrogen chloride to produce chlorine, so as to overcome the disadvantages of the prior art.

The process of the present invention is characterized by: incorporating an oxidizing agent, which does not generate additional or new impurities in the reaction system, into a gas stream of hydrogen chloride containing impurities (which may be referred to as hydrogen chloride exhaust gas), conducting oxidation pretreatment of said gas stream under the action of ultrasonic wave, and then removing the oxidized impurities by separation. By means of the actions of both the oxidizing agent and ultrasonic wave, the process can remove efficiently the impurities, i.e. the inorganic or organic compounds containing sulfur, and/or organic compounds containing halogen (particularly Cl), and/or hydrocarbons not containing halogen and the like, from the gas stream of hydrogen chloride.

According to the present invention, provided is a process of producing chlorine gas by catalytic oxidation of hydrogen chloride, the process comprises following steps: A) incorporating an oxidizing agent into a gas stream of hydrogen chloride containing impurities, conducting oxidation pretreatment of said gas stream under the action of ultrasonic wave, such that said impurities in the gas stream are oxidized; B) the gas stream obtained after the oxidation pretreatment in step A) is allowed to pass through a separator device wherein the oxidized impurities in the form of liquid and/or the oxidized impurities in the form of solid are removed from said gas stream so as to obtain a purified gas stream of hydrogen chloride; and C) the purified gas stream of hydrogen chloride from step B) is well mixed with a gas stream containing molecular oxygen, the resultant gas mixture is preheated to a reaction temperature (or to a reaction temperature as desired), and then introduced into an oxidation reactor and catalytically oxidized in the presence of a catalyst to produce chlorine gas; wherein the oxidizing agent used in step A) does not generate additional or new impurities in the whole reaction system; the impurities contained in the gas stream of hydrogen chloride are inorganic or organic compounds containing sulfur, organic compounds containing halogen, or hydrocarbons not containing halogen; said oxidizing agent is one or more chosen from the group consisted of hydrogen peroxide solution, ozone, hypochlorous acid, chlorine, chlorine dioxide, and chlorine trioxide.

The above-described oxidizing agent used in step A) is preferably hydrogen peroxide solution or ozone. The above-described oxidizing agent does not generate additional or new impurities in all the steps A), B) and C), particularly in step A).

Preferably, from the viewpoints of the cost and the possibility of unknown effects on subsequent catalytic oxidation, the oxidizing agent is added in amount of <10%(mol/mol), preferably <6%(mol/mol), more preferably <3%(mol/mol), based on the amount of hydrogen chloride, which depends on the content of the impurities to be oxidized in the gas stream of hydrogen chloride. As to the ratio of the oxidizing agent to the impurities, it is usually required that the amount of the oxidizing agent added is more than that of the impurities to be oxidized, such that the impurities should be oxidized sufficiently. Preferably, the amount of the added oxidizing agent is 30~500%, more preferably 40~400%, still more preferably 50~300%, further preferably 60~120%, still further preferably 70~100% more than that of the impurities, based on the molar ratio. However, the ratio of the oxidizing agent to the impurities may also be adjusted according to the cost and efficiency. An oxidation-reduction reaction is occurred between the oxidizing agent and the impurities in step A), in which a portion of the oxidizing agent is reduced and consumed by the impurities, and another portion self-decomposes in this course or in the subsequent step(s), thus the amount of the oxidizing agent entering into subsequent catalytic oxidation step has decreased significantly, usually below 2% (mol/mol, based on hydrogen chloride), and more preferably less than 1%, particularly preferably less than 0.5%, further preferably below 0.1%, and most preferably less than 0.05%.

In general, the oxidation pretreatment in step A) is a continuous gas phase reaction, and thus the addition amount (flow rate) of the oxidizing agent is selected according to the flow rate of the gas stream of hydrogen chloride and the content of the impurities therein.

Here, the raw materials used, products and common inert impurities in the oxidation process of hydrogen chloride are not included in the impurities originally contained in the gas stream of hydrogen chloride, or " additional or new impurities " described therein, wherein the common inert impurities include hydrogen chloride, oxygen, water vapor, chlorine, nitrogen, carbon monoxide, carbon dioxide, helium and others.

In general, the impurities contained in the gas stream of hydrogen chloride refer to one that need to or may be oxidized. The impurities contained in the gas stream of hydrogen chloride are inorganic or organic compounds containing sulfur, or are organic compounds containing halogen, or are hydrocarbons not containing halogen. The organic compounds containing halogen include monohalo- or polyhalo-aromatics, monohalo- or polyhalo-alkynes, monohalo- or polyhalo-olefins, monohalo- or polyhalo-cycloalkanes, saturated monohalo- or polyhalo-alkanes, monohalo- or polyhalo-organic acids and the like. The above-described impurities are more particularly inorganic or organic compounds containing sulfur (inclusive of the organic compounds containing both sulfur and chlorine), or organic compounds containing chlorine (exclusive of the organic compounds containing sulfur in addition to chlorine) such as chlorinated hydrocarbons (for example chlorinated aliphatic hydrocarbons, chlorinated cycloaliphatic hydrocarbons or chlorinated aromatics), or hydrocarbons not containing chlorine (which generally do not contain sulfur) such as aliphatic hydrocarbons, cycloaliphatic hydrocarbons or aromatics. The compounds containing sulfur include $H_2S$, COS, mercaptans, thioethers, cyclothioethers, disulfides, thiophenes and homologues thereof and the like. The organic compound containing chlorine includes monochloro- or polychloro-aromatics, monochloro- or polychloro-alkynes, monochloro- or polychloro-olefins, monochloro- or polychloro-cycloalkanes, saturated monochloro- or polychloro-alkanes, monochloro- or polychloro-organic acids and the like. As these impurities are present in the gas stream of hydrogen chloride or hydrogen chloride exhaust gas, so their molecular weight is not too high usually, and is between about 30~500, preferably between 50~300, more preferably between 60~150.

In general, the content of the inorganic or organic compounds containing sulfur, or the organic compounds containing chlorine, or the hydrocarbons not containing chlorine contained as the impurities in the gas stream of hydrogen chloride is <4%(mol/mol), preferably in the range of from 0.001% to 3%(mol/mol), more preferably in the range of from 0.01% to 2%(mol/mol), even more preferably in the range of from 0.1% to 1.5%(mol/mol), still more preferably in the range of from 0.3% to 1%(mol/mol), all based on the amount of hydrogen chloride. In the usual case, in common chemical processes such as synthesis of vinyl chloride, isocyanates, organic silicones, rubbers as well as medicine intermediates and pesticide intermediates, the impurities content in the byproduced hydrogen chloride is usually in the above-described ranges, and therefore the present invention has a wide range of applications.

Preferably, in step A), the oxidizing agent is dispersed as gas phase or in the form of liquid drop by a dispersing device (or also referred to a disperser) and introduced into the gas stream of hydrogen chloride, conducting oxidation pretreatment in the disperser, in order to oxidizing the impurities contained in the gas stream. Preferably, the disperser described therein can be any type of static dispersers, dynamic dispersers or jet dispersers and the like.

Preferably, the above-described oxidation pretreatment in step A is conducted while the dispersion and mixing is conducted. The ultrasonic device (or called as ultrasonic wave generator or ultrasonic generator) is located below the disperser, and the ultrasonic device emits and/or transfer ultrasonic wave to the wall of the disperser via a medium such as water, and the ultrasonic wave acts indirectly on the gas phase reactants in the disperser.

The frequency of the ultrasonic wave used is 20 kHz~120kHz, preferably 22 kHz~80 kHz, more preferably 25kHz~40kHz.

The power of the ultrasonic device used for generating ultrasonic wave is 100W~200kW, preferably 130W~150W or 500W~120kW, more preferably 1kW~100kW, or preferably 1.1kW~50kW, which depends on the type and size of the reactor used in oxidation pretreatment.

The separator used in step C) is one which may separate gas components from liquid components, and/or may separate gas components from solid components, and/or may separate gas components from liquid components and solid components, preferably a screen separator, a cyclone separator or a separator comprising a filler layer. In order to further increase the separate effect, two or three or more separators in series can be used.

The oxidation reactor used in step C) (also called catalytic oxidation reactor) is preferably a fluidized bed reactor or a fixed bed reactor.

After the impurities in the gas stream of hydrogen chloride are oxidized by the oxidizing agent, the chemical properties of the impurities, such as the boiling point, molecular weight, polarity etc., are changed, and a portion of or a large portion of the impurities becomes liquid or solid impurities, such that the oxidation products formed by oxidation of the impurities are easier to separated and removed in the separator. Another portion of the impurities is oxidized to the substances contained inherently in the reaction system or to inert substances, and thus need not to be separated from the reaction system. The substances contained inherently in the reaction system or inert substances described herein denote the raw materials used and products in oxidation reaction of hydrogen chloride, and also the inert substances which do not poisoning the catalyst and have no undesired effects on the oxidation reaction, such as hydrogen chloride, oxygen, moisture, chlorine, nitrogen, carbon monoxide, carbon dioxide, helium and the like. For example, if using hydrogen peroxide solution to react with the impurities contained in the gas stream of hydrogen chloride, the hydrogen peroxide is converted into water, and the impurities are oxidized into carbon dioxide, chlorine, etc. The resultant substances generated by oxidation do not, as such, have an obvious impact on the reaction such as the incurring of the catalyst inactivation and the like.

In addition, the oxidized agents containing chlorine such as hypochlorous acid, chlorine, chlorine dioxide, and chlorine trioxide can make certain organic compound impurities further substituted by chlorine or further oxidized, which changes the molecular weight or chemical properties (such as boiling point, polarity and the like) of the impurities. For example, if the impurities contained in the gas stream of hydrogen chloride are substituted by chlorine, the molecular weight of the impurities will increase, and may form macromolecular products or carbon deposits, which may easily be separated and removed by a separator. If the impurities contained in the gas stream of hydrogen chloride are oxidized to a high level, carbon dioxide, hydrogen chloride, chlorine and the like are produced, while the oxidized agents themselves are decomposed into hydrogen chloride, chlorine and the like. These low molecular substances formed by decomposition have no impact on the reaction system, and thus need not to be separated and removed from the reaction system.

In the course of oxidation pretreatment, some compound impurities will be oxidized into liquid or solid products, and these liquid or solid products are still harmful. For example, compounds containing sulfur may be oxidized into solid element sulfur, and the element sulfur is harmful to the subsequent catalytic oxidation. In the present invention, these liquid or solid harmful products such as the solid sulfur component etc. produced after the oxidation pretreatment are separated and removed by a separator in step C), so the harmful substances are not be introduced into the subsequent reaction(s) along with hydrogen chloride gas that has experienced (or subjected to) the oxidation pretreatment, and therefore have no negative influence on the catalytic oxidation of hydrogen chloride.

In order to achieve a better oxidation effect, it is necessary to uniformly disperse the oxidizing agent in the gas stream of hydrogen chloride. It is easy for dispersion of a gaseous oxidant such as ozone. If the oxidizing agent is liquid such as hydrogen peroxide solution, it needs to use a disperser to disperse the liquid oxidizing agent into small liquid droplets, in order to mix and suspend the oxidizing agent in the gas stream of hydrogen chloride. The disperser may select from customary dispersers such as static dispersers, dynamic dispersers or jet dispersers according to the specific conditions or particular situations.

Meanwhile, the present inventors find in the course of study that, in some processes of chemical reaction, introduction of ultrasonic wave can promote the reaction and accelerate the reaction speed. The inventors have done a corresponding research on the process of producing chlorine gas by catalytic oxidation of hydrogen chloride, and as a result, the inventors find that, by means of the actions of the ultrasonic wave in the step A) of the process of the present invention, the oxidation reaction can be promoted, the effects of the oxidation can be improved, and thus the degree of oxidation is more complete. At the same time, introduction of ultrasonic wave can also promote the self-decomposition of excess oxidizing agent, and hence reduce the amount of the oxidizing agent introduced into the subsequent step of catalytic oxidation. The ultrasonic wave is usually applied on the outside of or around the disperser, acts on the wall of disperser via a liquid, and thus acts on the reactants contained in the disperser indirectly.

The advantages and benefits of the present invention are as follows. The gas stream of hydrogen chloride after the oxidation pretreatment may suitably be mixed with a gas stream containing oxygen (or referred to as a gas stream containing molecular oxygen) in a specified proportion and conduct the oxidation reaction in a catalytic oxidation reactor. The gas stream treated as in the present invention may be applied in the reactions using Rh-based, Cu-based, Cr-based catalyst systems and the like, and used to conduct the oxidation of hydrogen chloride in various reaction processes employing a fluidized bed reactor, a fixed bed reactor, etc. The experimental results show that, where the gas stream of hydrogen chloride pretreated as in the present invention is used to performing the oxidation reaction of hydrogen chloride, the life of the catalyst can be prolonged efficiently, the plugging problems of the reactor system can be reduced, and the reactor's operating cycles and stability of the reactor system can be improved. Furthermore, the process may be operated continuously with lower energy consumption, and thus may be applied to industrial production conveniently.

## Brief Description of the Drawing

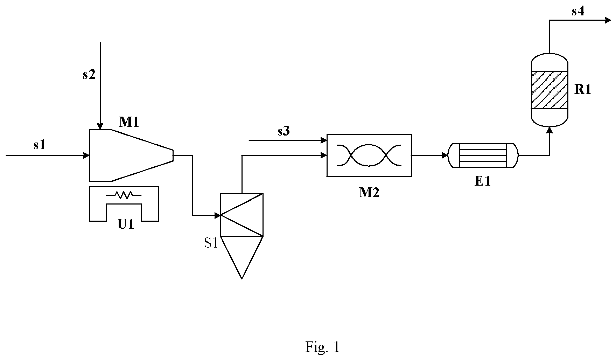

Fig. 1 shows a process flow diagram for carrying out the oxidation pretreatment and catalytic oxidation of hydrogen chloride of the present invention continuously, wherein:

Before the oxidation reaction of hydrogen chloride, the gas stream s1 containing impurities is firstly mixed with the stream s2 of an oxidizing agent by a disperser M1, and conducting oxidation pretreatment in the disperser M1, wherein the oxidation pretreatment is performed in an ultrasonic environment generated by an ultrasonic device U1. The gas stream obtained after the oxidation pretreatment firstly passes through a separator S1 to remove the liquid or solid oxidation products (i.e., oxidized impurities) which might be produced in the oxidation pretreatment, then is mixed with a gas stream s3 containing oxygen in a disperser M2, then enters into a preheator E1 to be heated to the temperature required by the reaction, and finally is introduced to a reactor R1 to conduct the catalytic oxidation reaction, thereby obtaining a reaction gas s4 containing chlorine.

## The Mode of carrying out the Invention

The embodiments of the present invention are further described with reference to the Drawing and Examples. The present invention should not be interpreted to be limited to these examples, rather comprise all variations and modifications within the scope of the claims.

The main raw materials used in the Examples are obtained as follows.

Purified/crude hydrogen chloride gas: manufactured by NINGBO WANHUA POLYURETHANES CO., LTD., industrial products; based on hydrogen chloride, the crude hydrogen chloride gas contains 50~1200 ppm(mol/mol), usually 100~1000 ppm (mol/mol), in particular 20-800 ppm(mol/mol) of chlorinated aromatics such as chlorobenzene etc. and a small amount of other compounds containing sulfur and compounds containing halogen. Based on hydrogen chloride, the purified hydrogen chloride gas has the impurities content of <10 ppm(mol/mol).

Oxygen gas: manufactured by Ningbo Wanhua Industry Park-Linde Air Separation Plants, industrial products; Purity>99.2%

The impurities in hydrogen chloride gas are analyzed by gas chromatography. A sample of hydrogen chloride gas is collected by using a gas cylinder, and the gas sample is injected to a gas chromatograph by a sampler. Gas chromatograph: Agilent GC6820; Chromatographic column: Capillary column 19095P-k25 HP-Al$_2$O$_3$/KCl, specification: 50m $\times$ 15$\mu$m $\times$ 0.53mm (internal diameter); Injection port temperature: 150°C; Split ratio: 20:1; Manual FID detector, detector temperature: 250; Carrier gas: H$_2$; Detector makeup gas: N$_2$.

The contents of Chlorine and hydrogen chloride gas are determined as follows.

(1) The detection principle is based on the following reaction formula:

$$Cl_2+2KI=2KCl+I_2$$

$$I_2+2\ Na_2S_2O_3=2NaI+Na_2S_4O_6$$

$$HCl+NaOH=NaCl+H_2O$$

(2) Formulating and titrating 0.1mol/L of Na$_2$S$_2$O$_3$ solution

Weigh about 6.2g of Na$_2$S$_2$O$_3$·5H$_2$O, dissolve it in an appropriate amount of distilled water (which is just boiled and cooled to remove O$_2$ and CO$_2$ solved in water), and thereto add 0.05~0.1g Na$_2$CO$_3$ (which is used to inhibit microorganism) to formulate 250ml of a solution. The resulting solution is stored in a brown vial in the dark. After storing 1-2 week(s), titrate the solution.

Precisely weigh 0.15g K$_2$Cr$_2$O$_7$ (baked for 2 hours at 110°C) into an iodine flask, add 10-20ml water into the flask to dissolve the K$_2$Cr$_2$O$_7$, and add thereto 2g KI and 10ml H$_2$SO$_4$. Shake it well, allow it to stand for 5 minutes, and then dilute the contents with 50ml water. Titrate it with the above-described Na$_2$S$_2$O$_3$ solution until the color of the solution changes to light yellowish green, at this moment, add 2ml starch indicator, further titrate with the Na$_2$S$_2$O$_3$ solution until the color of the solution changes from blue to light green (the titration end presents the very light green of Cr$^{3+}$). Perform parallel titrations three times, and average the results.

(3) Analysis and detection

The atmosphere of a 250ml sampling bottle is displaced with the exhaust gas of reaction (i.e., hydrogen chloride exhaust gas) for three minutes (bottom: inlet, top: outlet), to ensure that the air in the sampling bottle is displaced completely. Allow the gas in the sampling bottle react with KI sufficiently to produce I$_2$ solution, and then perform the titration.

Add 25.00ml of the I$_2$ solution into a 250ml Erlenmeyer flask, dilute it with 50ml distilled water, and titrate with the formulated Na$_2$S$_2$O$_3$ solution until a light yellow color is produced. Add 2ml a starch solution, further titrate until blue color just disappears (i.e. the endpoint). Calculate the concentration of I$_2$ solution.

HCl titration:

To the sample subjected to the I$_2$ titration add 2~3 drops or more of Phenolphthalein agent dropwise, until the colorless solution change into red color and the red color does not change over 0.5 min. Using Phenolphthalein as an indicator, titrate the unreacted HCl in the catalytic oxidation reaction with a standard solution of NaOH.

(4) The calculation formula of the conversion rate (or referred to as yield) of hydrogen chloride in the sample

$$\frac{a \cdot b \cdot 10^{-3}}{a \cdot b \cdot 10^{-3} + c \cdot d \cdot 10^{-3}} \quad \text{x}100\%$$

Wherein:

a denotes the concentration of the Na$_2$S$_2$O$_3$ solution, mol/L;
b denotes the milliliter number of Na$_2$S$_2$O$_3$ solution consumed by the titration, ml;
c denotes the concentration of the NaOH standard solution, mol/L;
d denotes the milliliter number of NaOH solution consumed by the titration, ml;

EXAMPLES

The invention is illustrated by the following examples using the gas stream of hydrogen chloride from the process of producing isocyanates, but the present invention is in no way limited by these examples.

Comparative example 1

Conduct the catalytic oxidation reaction of hydrogen chloride using the copper-based catalyst, and the catalyst is prepared as described in the example 1 of Chinese patent application No. 201010567038.9.

Fill 5kg of the above-described catalyst to a fixed bed reactor, and as hydrogen chloride feed gas of the oxidation reaction, gas streams of hydrogen chloride and of oxygen are introduced respectively at flow rates of 5m$^3$/hr to the reactor. The reaction is conducted at the temperature of 400°C and the pressure of 0.2 MPa. The hydrogen chloride used is a purified hydrogen chloride gas from an industrial production, which has impurities content of <10ppm (mol/mol, based on hydrogen chloride). The oxidation reaction is conducted for 100hr, and the chlorine yield of 87.2%~89.4% is obtained, without any obvious change of the catalyst activity.

Refill 5kg of the catalyst to the reactor, and conduct the oxidation reaction at the same reaction conditions as above. But, as hydrogen chloride feed gas of the oxidation reaction, use the unpurified crude hydrogen chloride gas obtained after phosgenation, i.e. the industrial crude hydrogen chloride gas produced in the process of preparing MDI (4,4'-diphenylmethane diisocyanate) from MDA (4,4'-diphenylmethane diamine) by phosgenation, which contains 425 ppm of chlorobenzene (mol/mol, based on hydrogen chloride) and a small amount of other organic compounds containing chlorine and compounds containing sulfur (the total content of these impurities is 0.05% (mol/mol, based on hydrogen chloride)). After about 40 hrs of reaction, the yield of chlorine is notably decreased. After 100 hrs of reaction, the yield of chlorine is reduced from initial 88.1% to 42.7%, and the catalyst is notably deactivated.

[Comparative example 2]

Conduct the catalytic oxidation reaction at the same reaction condition as those of Comparative example 1, except that use the above-mentioned industrial purified hydrogen chloride as the hydrogen chloride feed gas, and introduce 240ppm of $H_2S$ (mol/mol, based on hydrogen chloride) to the hydrogen chloride feed gas by a mini-type gas flow meter. After about 50 hrs of reaction, the yield of chlorine is notably decreased. After 100 hrs of reaction, the yield of chlorine is reduced from initial 87.0% to 56.4%, and the catalyst is notably deactivated.

Comparative example 3

Conduct the catalytic oxidation reaction at the same reaction conditions as those of Comparative example 1, except that use the above-mentioned industrial purified hydrogen chloride as the hydrogen chloride feed gas, and introduce an impurity mixture to the hydrogen chloride feed gas by a micro syringe pump, such that the gas stream of hydrogen chloride contains 2% of ortho-dichlorobenzene and 0.5% of carbon disulfide, and the total content of both amounts to 2.5% (all the above-described impurity contents are the mole percent based on hydrogen chloride). After about 20 hrs of oxidation reaction, the yield of chlorine is notably decreased. After 100 hrs of reaction, the yield of chlorine is reduced from initial 88.1% to 35.2%, and the catalyst is notably deactivated.

Comparative example 4

Conduct the catalytic oxidation reaction at the same reaction conditions as those of Comparative example 1, except that use the above-mentioned industrial purified hydrogen chloride as the hydrogen chloride feed gas, and introduce 1% of chlorobenzene, 1% of chloropropylene, and 1.9% of thiophene to the hydrogen chloride feed gas by a micro-metering pump, such that the total content of the above-described impurities amounts to 3.9% (all the above-described impurity contents are the mole percent based on hydrogen chloride). The yield of chlorine is 66.4% in the beginning, and after about 20 hrs of reaction, is reduced to 31.2%. When opening the reactor, find a lot of viscous material present in the reactor. The catalyst is obviously agglomerated.

Example 1

Conduct the catalytic oxidation reaction using the same catalyst and the same reaction conditions as those of Comparative example 1, wherein the hydrogen chloride feed gas used is the unpurified crude hydrogen chloride gas obtained after phosgenation, i.e. the industrial crude hydrogen chloride produced in the process of preparing MDI (4,4'-diphenylmethane diisocyanate) from MDA (4,4'-diphenylmethane diamine) by phosgenation, which is determined to contain 425 ppm of chlorobenzene (mol/mol, based on hydrogen chloride) and a small amount of other organic compounds containing chlorine and compounds containing sulfur (the total content of these impurities is 0.05% (mol/mol, based on hydrogen chloride)). Before the hydrogen chloride gas enters into the reactor, introduce ozone at the rate of 10L/hr of ozone (based on gaseous ozone) into the gas stream of hydrogen chloride by a jet disperser, the jet disperser comprises a jet (nozzle) section and a disperser section, wherein the disperser section is tubular in shape, and has an internal diameter of 40mm and a length of 540mm. Furthermore, apply (or emit) ultrasound wave around the disperser via water medium by using an ultrasonic device, wherein the ultrasonic power is set to 120W, and the ultrasonic frequency is set to 25 kHz. The catalytic oxidation reaction is conducted continuously for 100hr, and the chlorine yield of 86.7%~88.2% is obtained, without any obvious change of the catalyst activity. After 200 hrs of oxidation reaction, the liquid oxidized impurities that deposited in the above-mentioned screen separator are discharged from the bottom of the screen separator.

Example 2

Conduct the catalytic oxidation reaction using the same catalyst and the same reaction conditions as those of Comparative example 1, wherein the hydrogen chloride feed gas used is the unpurified crude hydrogen chloride gas obtained after phosgenation, i.e. the industrial crude hydrogen chloride produced in the process of preparing MDI (4,4'-diphenylmethane diisocyanate) from MDA (4,4'-diphenylmethane diamine) by phosgenation, which is determined to contain 425 ppm of chlorobenzene (mol/mol, based on hydrogen chloride) and a small amount of other organic compounds containing chlorine and compounds containing sulfur (the total content of these impurities is 0.05% (mol/mol, based on hydrogen chloride)). Before the hydrogen chloride gas enters into the reactor, inject a hydrogen peroxide solution into the gas stream of hydrogen chloride by a micro-metering pump, and mix them in a pipe-line disperser having an internal diameter of 35mm and a length of 700mm, wherein the hydrogen peroxide solution is introduced at the rate of 15g/hr based on hydrogen preroxide. Furthermore, apply (or emit) ultrasound wave around the disperser via water medium by using an ultrasonic device, wherein the ultrasonic power is set to 120W, and the ultrasonic frequency is set to 75 kHz. The catalytic oxidation reaction is conducted continuously for 100hr, and the chlorine yield of 87.7%~89.0% is obtained, without any obvious change of the catalyst activity. After 200 hrs of oxidation reaction, the liquid oxidized impurities are discharged from the bottom of the screen separator.

Example 3

Conduct the catalytic oxidation reaction using the same catalyst and the same reaction conditions as those of Comparative example 2, wherein the hydrogen chloride feed gas used is the industrial purified hydrogen chloride as above, and 240ppm of $H_2S$ (mol/mol, based on hydrogen chloride) is introduced to the hydrogen chloride by a mini-type gas flow meter. Before hydrogen chloride gas enters into the reactor, inject a hydrogen peroxide solution into the gas stream of hydrogen chloride in the same way as that of Example 2, and the pretreatment conditions and the conditions of subsequent catalytic oxidation reaction are also the same as that of Example 2. The oxidation reaction is conducted continuously for 100hr, and the chlorine yield of 86.9%~88.1% is obtained, without any obvious change of the catalyst activity. After 200 hrs of catalytic oxidation reaction, the solid particles of the oxidized impurities are discharged from the bottom of the cyclone separator. The present example shows that a $H_2S$ impurity can be removed.

Example 4

Conduct the catalytic oxidation reaction using the same catalyst and the same reaction conditions as those of Comparative example 3, wherein the hydrogen chloride feed gas used is the industrial purified hydrogen chloride as above, and an impurity mixture is introduced to the hydrogen chloride feed gas by a micro syringe pump, such that the gas stream of hydrogen chloride contains 2% of ortho-dichlorobenzene and 0.5% of carbon disulfide, and the total content of both amounts to 2.5% (the content of each impurity is the mole percent based on hydrogen chloride). Before hydrogen chloride gas enters into the reactor, introduce ozone into the gas stream of hydrogen chloride in the same way as that of Example 1 at the ozone flow rate of 250L/hr. Furthermore, apply (or emit) ultrasound wave around the disperser via water medium by using an ultrasonic device, wherein the ultrasonic power is set to 2KW, and the ultrasonic frequency is set to 100 kHz. The oxidation reaction is conducted continuously for 100hr, and the chlorine yield of 87.4%~88.5% is obtained, without any obvious change of the catalyst activity. After 200 hrs of reaction, the liquid and solid oxidized impurities are discharged from the bottom of the cyclone separator.

Example 5

Conduct the catalytic oxidation reaction using the same catalyst and the same reaction conditions as those of Comparative example 4, wherein the hydrogen chloride feed gas used is the industrial purified hydrogen chloride as above, and 1% of chlorobenzene, 1% of chloropropylene, and 1.9% of thiophene is introduced to the gas stream of hydrogen chloride by a micro-metering pump, such that the total content of the above-described impurities amounts to 3.9% (the content of each impurity is the mole percent based on hydrogen chloride). Before hydrogen chloride gas enters into the reactor, inject a hypochlorous acid solution into the gas stream of hydrogen chloride by a micro-metering pump, wherein additionally the hypochlorous acid solution is obtained by dissolving chlorine gas in water, and based on hypochlorous acid, the introduction rate of the hypochlorous acid solution is 1.1 kg/hr. Furthermore, apply (or emit) ultrasound wave around the disperser via water medium by using an ultrasonic device, wherein the ultrasonic power is set to 5KW, and the ultrasonic frequency is set to 120 kHz. The oxidation reaction is conducted continuously for 100hr, and the chlorine yield of 85.4%~86.1% is obtained, without any obvious change of the catalyst activity. After 200 hrs of reaction, the liquid and solid oxidized impurities are discharged from the bottom of the cyclone separator. When opening the reactor, the reactor is found to be relatively clean, the catalyst used therein is still in the same form of dispersed particles as that of new catalyst, with a very small amount of coking in the reactor.

As seen from the above-described Examples and Comparative Examples, by employing the pretreatment method of hydrogen chloride feed gas of the present invention, the impurities can be removed from hydrogen chloride effectively, and the stability of the catalyst can be maintained. The process of the present invention can be used continuously, and used conveniently for a large-scale industrial production of chlorine from hydrogen chloride gas.

## Claims

1. A process of producing chlorine gas by catalytic oxidation of hydrogen chloride, **characterized in that** said process comprises following steps:

   A) incorporating an oxidizing agent into a gas stream of hydrogen chloride containing impurities, conducting oxidation pretreatment of said gas stream under the action of ultrasonic wave, such that said impurities in the gas stream are oxidized;
   B) the gas stream obtained after the oxidation pretreatment in step A) is allowed to pass through a separator device wherein the oxidized impurities in the form of liquid and/or the oxidized impurities in the form of solid are removed from said gas stream so as to obtain a purified gas stream of hydrogen chloride; and
   C) the purified gas stream of hydrogen chloride from step B) is well mixed with a gas stream containing molecular oxygen, the resultant gas mixture is preheated to a reaction temperature, and then introduced into an oxidation reactor and catalytically oxidized in the presence of a catalyst to produce chlorine gas;

   wherein the oxidizing agent used in step A) does not generate additional or new impurities in the whole reaction system;
   the impurities contained in the gas stream of hydrogen chloride are inorganic or organic compounds containing sulfur, organic compounds containing halogen, or hydrocarbons not containing halogen;
   said oxidizing agent is one or more chosen from the group consisted of hydrogen peroxide solution, ozone, hypochlorous acid, chlorine, chlorine dioxide, and chlorine trioxide.

2. The process according to claim 1, **characterized in that** the oxidizing agent is added in an amount of <10%(mol/mol), based on the amount of hydrogen chloride.

3. The process according to claim 2, **characterized in that** the oxidizing agent is added in an amount of <6%(mol/mol), based on the amount of hydrogen chloride.

4. The process according to any one of claims 1-3, **characterized in that** the inorganic or organic compounds containing sulfur include $H_2S$, COS, mercaptans, thioethers, cyclothioethers, disulfides, thiophenes and also homologues thereof; and the organic compounds containing halogen include monohalo- or polyhalo-aromatics, monohalo- or polyhalo-alkynes, monohalo- or polyhalo-olefins, monohalo- or polyhalo-cycloalkanes, saturated monohalo- or polyhalo-alkanes, and also monohalo- or polyhalo-organic acids.

5. The process according to claim 1 or 2, **characterized in that** the content of the inorganic or organic compounds containing sulfur, the organic compounds containing chlorine, or the hydrocarbons not containing chlorine is <4%(mol/mol), based on the amount of hydrogen chloride.

6. The process according to claim 1 or 2, **characterized in that** the content of the inorganic or organic compounds containing sulfur, the organic compounds containing chlorine, or the hydrocarbons not containing chlorine is <3%(mol/mol), based on the amount of hydrogen chloride.

7. The process according to any one of claims 1-3, **characterized in that** the oxidizing agent is dispersed as gas phase or in the form of liquid drops by a disperser and introduced into the gas stream of hydrogen chloride, and conduct oxidation pretreatment, in order to oxidizing the impurities contained in the gas stream.

8. The process according to claim 7, **characterized in that** said disperser can be any type of static dispersers, dynamic dispersers or jet dispersers.

9. The process according to claim 1, **characterized in that** the frequency of the ultrasonic wave used is 20 kHz~120kHz.

10. The process according to claim 9, **characterized in that** the frequency of the ultrasonic wave used is 22 kHz~80 kHz.

11. The process according to claim 1, **characterized in that** the power of the ultrasonic device used for generating ultrasonic wave is 100W~200kW.

12. The process according to claim 11, **characterized in that** the power of the ultrasonic device used for generating ultrasonic wave is 130W~150kW.

13. The process according to claim 1, **characterized in that** said separator is one which may separate gas components from liquid components, and/or may separate gas components from solid components, and/or may separate gas components from liquid components and solid components.

14. The process according to claim 1, **characterized in that** said separator is a screen separator, a cyclone separator or a separator comprising a filler layer.

**Patentansprüche**

1. Ein Verfahren zur Herstellung von Chlorgas mittels katalytischer Oxidation von Chlorwasserstoff, **gekennzeichnet dadurch, dass** das Verfahren folgende Schritte umfasst:

   (A) Einbringen eines Oxidationsmittels in einen Gasstrom aus Chlorwasserstoff enthaltend Verunreinigungen, Durchführen einer Oxidationsvorbehandlung des Gasstroms unter Einwirkung von Ultraschallwellen, sodass die Verunreinigungen in dem Gasstrom oxidiert werden;
   (B) dem nach der Oxidationsvorbehandlung in Schritt A) erhaltenen Gasstrom wird ermöglicht, eine Abscheider-Vorrichtung zu passieren, wobei die oxidierten Verunreinigungen in Form einer Flüssigkeit und/oder die oxidierten Verunreinigungen in Form eines Feststoffes von dem Gasstrom entfernt werden, um so einen gereinigten Gasstrom aus Chlorwasserstoff zu erhalten; und
   (C) der gereinigte Gasstrom aus Chlorwasserstoff aus Schritt B) wird mit einem Gasstrom enthaltend molekularen Sauerstoff gründlich vermischt, die resultierende Gasmischung wird auf eine Reaktionstemperatur vorgeheizt und anschließend in einen Oxidationsreaktor eingebracht und in Anwesenheit eines Katalysators katalytisch oxidiert, um Chlorgas herzustellen;

   wobei das Oxidationsmittel, das in Schritt A) verwendet wird, keine zusätzlichen oder neuen Verunreinigungen in dem gesamten Reaktionssystem erzeugt;
   die Verunreinigungen, die in dem Gasstrom aus Chlorwasserstoff enthalten sind, anorganische oder organische Verbindungen enthaltend Schwefel, organische Verbindungen enthaltend Halogen oder Kohlenwasserstoffe, die kein Halogen enthalten, sind;
   das Oxidationsmittel eines oder mehrere ausgewählt aus der Gruppe bestehend aus Wasserstoffperoxid-Lösung, Ozon, hypochloriger Säure, Chlor, Chlordioxid und Chlortrioxid ist.

2. Das Verfahren gemäß Anspruch 1, **gekennzeichnet dadurch, dass** das Oxidationsmittel in einer Menge von <10%(mol/mol), basierend auf der Menge an Chlorwasserstoff, zugegeben wird.

3. Das Verfahren gemäß Anspruch 2, **gekennzeichnet dadurch, dass** das Oxidationsmittel in einer Menge von <6%(mol/mol), basierend auf der Menge an Chlorwasserstoff, zugegeben wird.

**4.** Das Verfahren gemäß einem der Ansprüche 1-3, **gekennzeichnet dadurch, dass** die anorganischen oder organischen Verbindungen enthaltend Schwefel $H_2S$, COS, Mercaptane, Thioether, Cyclothioether, Disulfide, Thiophene und ebenso Homologe davon beinhalten; und die organischen Verbindungen enthaltend Halogen Monohalo- oder Polyhaloaromaten, Monohalo- oder Polyhaloalkine, Monohalo- oder Polyhaloolefine, Monohalo- oder Polyhalocycloalkane, gesättigte Monohalo- oder Polyhaloalkane und ebenso organische Monohalo- oder Polyhalosäuren beinhalten.

**5.** Das Verfahren gemäß Anspruch 1 oder 2, **gekennzeichnet dadurch, dass** der Gehalt der anorganischen oder organischen Verbindungen enthaltend Schwefel, der organischen Verbindungen enthaltend Chlor oder der Kohlenwasserstoffe, die kein Chlor enthalten, <4%(mol/mol) ist, basierend auf der Menge an Chlorwasserstoff.

**6.** Das Verfahren gemäß Anspruch 1 oder 2, **gekennzeichnet dadurch, dass** der Gehalt der anorganischen oder organischen Verbindungen enthaltend Schwefel, der organischen Verbindungen enthaltend Chlor oder der Kohlenwasserstoffe, die kein Chlor enthalten, <3%(mol/mol) ist, basierend auf der Menge an Chlorwasserstoff.

**7.** Das Verfahren gemäß einem der Ansprüche 1-3, **gekennzeichnet dadurch, dass** das Oxidationsmittel mittels eines Dispersers als Gasphase oder in Form flüssiger Tröpfchen dispergiert ist und in den Gasstrom aus Chlorwasserstoff eingebracht wird und die Oxidationsvorbehandlung vollzieht, um die in dem Gasstrom enthaltenen Verunreinigungen zu oxidieren.

**8.** Das Verfahren gemäß Anspruch 7, **gekennzeichnet dadurch, dass** der Disperser eine beliebige Art von statischen Dispersern, dynamischen Dispersen oder Strahldispersern sein kann.

**9.** Das Verfahren gemäß Anspruch 1, **gekennzeichnet dadurch, dass** die Frequenz der verwendeten Ultraschallwellen 20 kHz~120 kHz ist.

**10.** Das Verfahren gemäß Anspruch 9, **gekennzeichnet dadurch, dass** die Frequenz der verwendeten Ultraschallwellen 22 kHz~80 kHz ist.

**11.** Das Verfahren gemäß Anspruch 1, **gekennzeichnet dadurch, dass** die Leistung der Ultraschallvorrichtung, die für die Erzeugung von Ultraschallwellen verwendet wird, 100W~200kW ist.

**12.** Das Verfahren gemäß Anspruch 11, **gekennzeichnet dadurch, dass** die Leistung der Ultraschallvorrichtung, die für die Erzeugung von Ultraschallwellen verwendet wird, 130W~150kW ist.

**13.** Das Verfahren gemäß Anspruch 1, **gekennzeichnet dadurch, dass** der Abscheider einer ist, der Gaskomponenten von flüssigen Komponenten trennen kann und/oder Gaskomponenten von festen Komponenten trennen kann und/oder Gaskomponenten von flüssigen Komponenten und festen Komponenten trennen kann.

**14.** Das Verfahren gemäß Anspruch 1, **gekennzeichnet dadurch, dass** der Abscheider ein Siebabscheider, ein Zyklonabscheider oder ein Abscheider umfassend eine Füllstoffschicht ist.

**Revendications**

**1.** Procédé de production de chlore gazeux par oxydation catalytique de chlorure d'hydrogène, **caractérisé en ce que** ledit procédé comprend les étapes suivantes consistant à :

A) incorporer un agent d'oxydation dans un courant gazeux de chlorure d'hydrogène contenant des impuretés, réaliser un prétraitement par oxydation dudit courant gazeux sous l'action d'une onde ultrasonore, de sorte que lesdites impuretés du courant gazeux soient oxydées ;
B) laisser passer le courant gazeux obtenu après le prétraitement par oxydation réalisé lors de l'étape A) à travers un dispositif de séparation dans lequel les impuretés oxydées sous la forme d'un liquide et/ou sous la forme d'un solide sont éliminées dudit courant gazeux de manière à obtenir un courant gazeux purifié de chlorure d'hydrogène ; et
C) bien mélanger le courant gazeux purifié de chlorure d'hydrogène obtenu lors de l'étape B) avec un courant gazeux contenant de l'oxygène moléculaire, le mélange gazeux résultant étant préchauffé à une température réactionnelle, puis introduit dans un réacteur d'oxydation et catalytiquement oxydé en présence d'un catalyseur pour produire du chlore gazeux ;

dans lequel l'agent d'oxydation utilisé lors de l'étape A) ne génère pas d'impuretés supplémentaires ou de nouvelles impuretés dans l'ensemble du système réactionnel ;
les impuretés contenues dans le courant gazeux de chlorure d'hydrogène sont des composés inorganiques ou organiques contenant du soufre, des composés organiques contenant un halogène, ou des hydrocarbures ne contenant pas d'halogène ;
ledit agent d'oxydation est un ou plusieurs éléments choisis dans le groupe constitué par une solution de peroxyde d'hydrogène, l'ozone, l'acide hypochloreux, le chlore, le dioxyde de chlore et le trioxyde de chlore.

2. Procédé selon la revendication 1, **caractérisé en ce que** l'agent d'oxydation est ajouté en une quantité < à 10 % (mol/mol), par rapport à la quantité de chlorure d'hydrogène.

3. Procédé selon la revendication 2, **caractérisé en ce que** l'agent d'oxydation est ajouté en une quantité < à 6 % (mol/mol), par rapport à la quantité de chlorure d'hydrogène.

4. Procédé selon l'une quelconque des revendications 1 à 3, **caractérisé en ce que** les composés inorganiques ou organiques contenant du soufre incluent $H_2S$, COS, les mercaptans, les thioéthers, les cyclothioéthers, les disulfures, les thiophènes et également les homologues de ceux-ci ; et les composés organiques contenant un halogène incluent les composés monohalogéno- ou polyhalogéno-aromatiques, les monohalogéno- ou polyhalogéno-alcynes, les monohalogéno- ou polyhalogéno-oléfines, les monohalogéno- ou polyhalogéno-cycloalcanes, les monohalogéno- ou polyhalogéno-alcanes saturés et également les acides monohalogéno- ou polyhalogéno-organiques.

5. Procédé selon la revendication 1 ou 2, **caractérisé en ce que** la teneur en composés inorganiques ou organiques contenant du soufre, en composés organiques contenant du chlore ou en hydrocarbures ne contenant pas de chlore est < à 4 % (mol/mol), par rapport à la quantité de chlorure d'hydrogène.

6. Procédé selon la revendication 1 ou 2, **caractérisé en ce que** la teneur en composés inorganiques ou organiques contenant du soufre, en composés organiques contenant du chlore ou en hydrocarbures ne contenant pas de chlore est < à 3 % (mol/mol), par rapport à la quantité de chlorure d'hydrogène.

7. Procédé selon l'une quelconque des revendications 1 à 3, **caractérisé en ce que** l'agent d'oxydation est dispersé en phase gazeuse ou sous la forme de gouttes de liquide par un disperseur puis introduit dans le courant gazeux de chlorure d'hydrogène, et un prétraitement par oxydation est réalisé, afin d'oxyder les impuretés contenues dans le courant gazeux.

8. Procédé selon la revendication 7, **caractérisé en ce que** ledit dispositif de dispersion peut être n'importe quel type de disperseurs statiques, de disperseurs dynamiques ou de disperseurs à jet.

9. Procédé selon la revendication 1, **caractérisé en ce que** la fréquence de l'onde ultrasonore utilisée est comprise entre 20 kHz et 120 kHz.

10. Procédé selon la revendication 9, **caractérisé en ce que** la fréquence de l'onde ultrasonore utilisée est comprise entre 22 kHz et 80 kHz.

11. Procédé selon la revendication 1, **caractérisé en ce que** la puissance du dispositif ultrasonore utilisé pour produire une onde ultrasonore est comprise entre 100 W et 200 kW.

12. Procédé selon la revendication 11, **caractérisé en ce que** la puissance du dispositif ultrasonore utilisé pour produire une onde ultrasonore est comprise entre 130 W et 150 kW.

13. Procédé selon la revendication 1, **caractérisé en ce que** ledit séparateur est capable de séparer les composants gazeux des composants liquides, et/ou les composants gazeux des composants solides, et/ou les composants gazeux des composants liquides et solides.

14. Procédé selon la revendication 1, **caractérisé en ce que** ledit séparateur est un séparateur à tamis, un séparateur à cyclone ou un séparateur comprenant une couche de remplissage.

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 85370 A
- US 165802 A
- US 118209 A
- CN 1201013
- US 2008264253 A
- CN 101652162
- CN 101448736 A
- CN 101448739 A
- CN 101293636 A
- WO 2010020346 A1
- WO 2008125235 A1
- WO 2008029938 A1
- JP 2000034105 A
- JP 2006117529 A
- US 20080267846 A
- CN 201010567038